# EUROPEAN PATENT APPLICATION

(11) **EP 1 568 466 A1**
(43) Date of publication of application: **31.08.2005**
(21) Application number: 03770052.3
(22) Date of filing: 30.10.2003
(51) Int. Cl.: B29C 51/26, B29C 51/42, B05B 5/08, B05B 15/04, B05D 1/32

(54) **METHOD FOR PRODUCING MASKING MATERIAL**

(30) Priority: 06.11.2002 JP 2002322355
(71) Applicant: NAGOYA OILCHEMICAL CO., LTD., Aichi 476-0001 (JP)
(72) Inventor: Ogawa, Masanori, Nagoya Oilchemical Co., Ltd., Tokai-shi, Aichi 476-0001 (JP); Ito, Kuninori, Nagoya Oilchemical Co., Ltd., Tokai-shi, Aichi 476-0001 (JP)
(74) Representative: Vossius & Partner
(86) International application number: PCT/JP2003/013960
(87) International publication number: WO 2004/041514

(57) **Abstract**

The object of the present invention is to provide a masking member which does not contract or deform while being used with heat. In order to attain the object of the present invention, a method for the manufacturing of a thermoplastic resin masking member is provided, in which a thermoplastic resin sheet is first stretch-molded making a green masking member, the green masking member then being heat-treated at a temperature above the thermoplastic resin sheet's softening point, to achieve a size and shape suitable for the part to be masked. Under heat treatment, residual stress residing in the molded article is reduced, so that its construction and deformation is eliminated in the next heating step.

## Description

### FIELD OF THE INVENTION

The present invention relates to a masking member used to protect a specific part not to be coated in a case where, for instance, a car body or bumper is coated.

### BACK GROUND OF THE INVENTION

Hitherto, a molded article manufactured by vacuum and/or pressure forming a polymer alloy sheet containing engineering plastic such as polysulfone, polyphenylene oxide, polyphenylene sulfide, methylpentene copolymer or the like, and a thermoplastic resin such as a polyamide or the like, wherein a filler such as calcium carbonate, or the like, is mixed in with said polymer alloy, has been provided.(for example, see Patent Literature1)

### Patent Literature JP3154547 A1

Said masking member has a problem in that the residual stress caused by stretching force exerted when said masking member is molded by vacuum and/or pressure forming, resides in the resulting molded article, for example, said masking member contracts as a result of heat treatment during the coating process, making it difficult to reuse said masking member.

### DISCLOSURE OF THE INVENTION

To solve said problem, the present invention provides a method for manufacturing a masking member comprising; the preparation of a green masking member by stretch molding a thermoplastic resin sheet, and then heating and softening said green masking member to achieve a size and shape suitable for the part to be masked.

Said heating and softening treatment is carried out at a temperature below that of the melting point of said thermoplastic resin sheet. For instance, said thermoplastic resin sheet is made of thermoplastic resin in which filler is mixed, or a foamed thermoplastic resin sheet is used as said thermoplastic resin sheet.

Said thermoplastic resin sheet may be made of a polyolefin group resin, a polystyrene resin, or a polymer alloy containing an amorphous thermoplastic resin and a crystalline thermoplastic resin. As for said amorphous resin, one or more kind(s) of resin(s) selected from a group consisting of polystyrene, acrylonitrile-butadiene-styrene resin, polycarbonate, modified polyphenylene ether, polyphenylene ether, polysulfone, polyarylate, polyimide, polyetherimide, polyethersulfone, and polyamideimide, is(are) preferably used, and as for said crystalline thermoplastic resin, a polyolefin group resin and/or polyamide group resin is(are) preferably used. Commonly, vacuum and/or pressure forming is applied for said stretch molding.

### (Action)

When a thermoplastic resin sheet is molded by stretch molding such as vacuum and/or pressure forming, residual stress may reside in the resulting molded article, so that when said molded article is heated and softened after molding, said molded article may contract due to residual stress, removing or decreasing the residual stress in the resulting molded article, and consequently the contraction of said molded article may be reduced or eliminated in the next heating step.

When said heating and softening treatment is carried out at a temperature below that of the melting point of the thermoplastic resin of said molded article, the deformation of said molded article as the result of the heating and softening treatment may be prevented.

In the case where said thermoplastic resin sheet is made of a thermoplastic resin in which a filler is mixed, the filler's effect may improve the mechanical strength and heat resistance of said molded article.

In the case where said thermoplastic resin sheet is made of polypropylene, a molded article having an excellent moldability and solvent resistance can be obtained.

In the case where said thermoplastic resin sheet is made of a polymer alloy containing an amorphous thermoplastic resin and a crystalline thermoplastic resin, the broken or deformed crystal structure of said crystalline thermoplastic resin as a result of the stretching force exerted during stretch-molding, seems to be repaired and regenerated with heating treatment, and after the crystal structure of said crystalline thermoplastic resin of said molded article is repaired and regenerated as described above, the resulting molded article does not deform substantially when heated.

In the case where said amorphous thermoplastic resin(s) is(are) of one or more kind(s) of resin(s), selected from a group consisting of polystyrene(PS), acrylonitrile-butadiene-styrene resin(ABS), polycarbonate(PC), modified polyphenylene ether(modified PPE), polyphenylene ether(PPE), polysulfone(PSF), polyaarylate(PAR), polyimide(PI), polyetherimide(PEI), polyethersulfone(PES), and polyamideimide(PAI), and said crystalline thermoplastic resin(s) is(are) a polyolefin group resin and/or polyamide group resin, the mechanical strength and heat resistance of the resulting molded article may be improved by said engineering plastics.

From the view point of easy availability, cost, and moldability, said crystalline thermoplastic resin may preferably be a polypropylene and/or polyamide, to which vacuum and/or pressure forming is(are) commonly applied as said stretch molding.

### BRIEF DESCRIPSION OF THE DRAWINGS

Figure 1 relates an embodiment of the present invention, and is a perspective view of a making member, and the front bumper of a car to which said masking member is to be attached.
Figure 2 is a perspective view of a masking member from another embodiment.
Figure 3 is a perspective view of a masking member from still another embodiment.

### DESCRIPTION OF NOTATIONS

### 1,11,21 present masking members

### DETAILED DESCRIPTION AND PREFERRED EMBODIMENT OF THE INVENTION

The present invention is precisely described below.

Thermoplastic resin is used as the material for the thermoplastic resin sheet in the present invention.

Said thermoplastic resin may be such as polyethylene, polypropylene, ethylene-propylene copolymer, ethelen-propylene-terpolymer, ethylene-vinyl acetate copolymer, polyvinyl chloride, polyvinylidene chloride, polyvinyl acetate, fluororesin, thermoplastic acryl resin, thermoplastic urethane resin, acrylonitrile-butadiene-copolymer, polystyrene, styrene-acrylonitrile resin, stylene-butadiene-copolymer, acrylonitrile-butadiene-stylene copolymer, or the like.

Said engineering plastic especially used in the present invention is such as: a thermoplastic-type engineering plastic chosen from among polyamide(PA), polyether(PE), polyacetal(POM), polycarbonate(PC), polyethyleneterephthalate(PET), polybutyreneterephthalate(PBT), polysulfone(PSF), polyethersulfone(PES), polyphenylene ether(PPE), modified polyphenylene ether, polyphenylene sulfide(PPS), polyarylate(PAR), polyetheretherketone(PEEK), polyamideimide(PAI), polyimide(PI), polyetherimide(PEI), polyaminobismairemide, methylpentene copolymer(TPX), celluloseacetate(CA) or the like, a liquid crystal type such as polyallylether or the like, a compression molding type such as fluororesin like polytetrafuluoroethethylen (PTFE), amorphous polymer, polyaminobismaleimide, bismaleimide-triazine group thermosetting tune aromatic nolnimide or the like, preferable engineering plastic being polyphenylene ether and modified polyphenylene ether.

Said modified PPE is such as a PPE to which styrene group monomer(s) such as styrene, α-methylstyrene, α-ethylstyren, α-methylvinyltoluene, α -methyldialkylstyrene, o,m or p-vinyltoluene, o-ethylstyrene, p-ethylstyrene, 2,4-dimethylstyrene, o-chlorostyrene, p-chlorostyrene, o-bromstyrene, 2,4-dichlorostyrene, 2-chloro-4-methylstyrene, 2,6-dichlorostyrene, vinylnaphthalene, vinylanthracene or the like is(are) graft-copolymerized, or a polymer alloy in which styrene group resin(s) such as polystyrene, styrene-acrylonitrile resin, acrylonitrile-butadiene-styrene resin(ABS), high impact polystyrene(HIPS) or the like, is(are) mixed into said PPE.

Two or more kinds of said thermoplastic resin may be mixed together to prepare a polymer blend or polymer alloy, especially a preferable thermoplastic resin being a polymer alloy containing amorphous thermoplastic resin and crystalline thermoplastic resin.

Said polymer alloy has excellent moldability due to said amorphous thermoplastic resin, and in said polymer alloy, the crystal structure of said crystalline thermoplastic resin, which is broken or deformed by the stretching force exerted during stretch-molding, may be repaired and regenerated with heating treatment, resulting in a molded article which will not contract substantially any more from being heated, after the broken and deformed crystal structure of said crystalline thermoplastic resin is repaired and regenerated with the heating treatment.

In a case where said engineering plastic is used as said amorphous thermoplastic resin, the mechanical strength and heat resistance of the resulting molded article may be improved. An engineering plastic which is easily available and inexpensive may be PPE, or modified PPE, and a preferable crystalline thermoplastic resin may be a polyolefin group resin and/or polyamide group resin.

Said polyolefin group resin used in said polymer alloy may be such as polyethylene, polypropylene, ethylene-propylene copolymer, ethylene-vinyl acetate copolymer, or the like. Two or more kinds of said polyolefin group resin may be used together.

Further, the polyamide used in said polymer alloy may be such as poly(tetramethylene adipamide) (nylon 46), poly(hexamethylene adipamide) (nylon 66), polypyrrolidone (nylon 4), poly caprolactam (nylon 6), polyheptolactam (nylon 7), polycaprilactam (nylon 8), polynonanolactam (nylon 9), polyundeca 1 lactam (nylon 11), polydodeca 1 lactam (nylon 12), polyhexamethylene azelaic acid amide (nylon 69), polyhexamethylene sebacic acid amide (nylon 610), polyhexamethylene phthalamide (nylon 6iP), polyhexamethylene terephthalamide, polyhexamethyleneisophthalamide, polytetramethyleneisophthalamide, poly(m-xylene adipamide), nylon MSD6, polyamide consisting of hexamethylenediamine and n-dodecanedioic acid (nylon 612),
polyamide consisting of dodecamethylenediamine and n-dodecanedioic acid (nylon 1212), hexamethylene adipamide/caprolactam (nylon66/6), hexamethylene adipamide/hexamethyleneisophthalamide (nylon66/ nylon 6iP), hexamethylene adipamide/hexamethyleneterephthalamide (nylon66/nylon 6T), trimethylhexamethylene oxide/hexamethylene oxide (nylontrimethyl-62/62), hexamethylene adipamide/hexamethylene azelaic acid amide (nylon66/ nylon69), hexamethylene adipamide/hexamethylene azelaic acid amide/caprolactam (nylon66/ nylon69/nylon6), poly(capronamide/hexamethylene sebacic acid amide) (nylon6/610), poly(capronamide/hexamethylenedodecanoic acid amide) (nylon6/612), nylonMXD6, poly(capronamide/hexamethyleneisophthalamide) (nylon6/6I), aromatic polyamide or the like.

Poly(hexamethylene adipamide(nylon66), and polycaprolactam(nylon 6) are especially preferable for said polymer alloy.

Two or more kinds of said polyamides may be mixed together.

Generally, said crystalline thermoplastic resin and said amorphous thermoplastic resin are mixed together at a weight ratio in the range of between 1:99 and 99:1, preferably 90:10 and 10:90.

Rubber and/or elastomer may be preferably added to said polymer alloy to improve its flexibility and moldability. Said rubber and/or elastomer may be such as acrylic rubber, butyl rubber, silicon rubber, urethane rubber, fluoride type rubber, polysulfide type rubber, graft modified rubber, butadiene rubber, polybutadiene, isoprene rubber, polyisoprene, chloroprene rubber, polyisobutylene rubber, polybutene rubber, Thiokol rubber, polysulfide rubber, polyether rubber, epichlorohydrin rubber, norborneneter-polymer, butadiene having hydroxyllated or carboxylated end, partially hydrogenated-styrene-butadiene block copolymer, chlorosulfonated rubber, isobutene-isoprene rubber, acrylate-butadiene rubber, styrene-butadiene rubber, acrylonitrile-butadiene rubber, pyridine-butadiene rubber, styrene-isoprene rubber, or the like; natural rubber; a styrenic thermoplastic elastomer such as styrene-ethylene copolymer, polystyrene-polybutadiene-polystyrene(SBS), polystyrene-polyisoprene-polystyrene(SIS), poly( α -methylstyrene)-polybutadiene-poly( α-methylstyrene) ( α -MeS-B α-MeS), poly( α-methylstyrene)-polyisoprene-poly( α -methylstyrene), ethylene-propylene copolymer(EP), butadiene-styrene-copolymer(BP), ethylene-propylene-ethylidene copolymer, ethelene-propylene-diene copolymer, ethylene-propylene copolymer rubber, ethylene-butane-1 copolymer rubber, ethylene-propylene-ethyliden-norbornene copolymer rubber, ethylene-propylene-dicyclopentadiene copolymer rubber, ethylene-propylene-1,4-hexadiene copolymer rubber, ethylene-butene-1-ethyliden-norbornene copolymer rubber, ethylene butene-1-dicyclopentadiene copolymer rubber, ethylene-butene-1-1,4-hexadiene copolymer rubber, acrylonitrile-chloroprene rubber(NCR), styrene-chloroprene copolymer rubber(SCR), styrene-butadiene-styrene copolymer(SBS), styrene-isoprene-stylene copolymer(SIS), styrene-hydrogeneted-polyolefin -stylene copolymer(SEBS), or the like; a block copolymer such as butadiene-styrene block copolymer, styrene-intermediate rubber -styrene block copolymer, or the like.

Two or more kinds of said rubber and/or elastomer may be mixed into said thermoplastic resin. Usually said rubber and/or elastomer is (are) added to said thermoplastic resin in an amount of less than 100 weight parts.

In a case where PPE or modified PPE is used as said thermoplastic resin, a styrene group thermoplastic elastomer may be the preferable selection as said compatible elastomer.

Further, to improve the compatibility of said polymer alloy, a compatibilizer may be preferably added. For instance, in the case of a polymer alloy of PPE or modified PPE and PP, a block or graft copolymer of PPE and polypropylene, a block or graft copolymer of polypropylene and polystyrene, or a block or graft copolymer of PPE and ethylene-butene copolymer may be used as the compatibilizer, and in the case of a polymer alloy of PPE or modified PPE and PA, a hydrogenated diblock copolymer, or triblock copolymer of an alkenyl aromatic compound (such as styrene) and conjugated diene (such as butadiene, isoprene) is used as the compatibilizer. A compatibilizer for a polymer alloy of aromatic amorphous engineering plastic such as PPE, modified PPE, or the like, and a polyamide, may be such as a compound containing both(i) ethylenic carbon-carbon double bond, or carbon-carbon triple bond and (ii) carbonic acid, acid anhydride, acid amide, imide, carbonic acid ester, amine, or hydroxyl group; (b) a liquid diene polymer; (c) an epoxy compound; (d) a polycarbonic acid or a derivative thereof; (e) an oxidized polyolefin wax; (f) a compound containing acyl functional group; (g) a chloroepoxy triazine compound; and(h) a trialkyl amine salt of maleic acid or fumaric acid, or the like.

Said compatibilizers (a) to (h) are precisely disclosed in Tokkaihei09-12497, and each compatibilizer (a) to (h) is further disclosed in US4,315,086(concerned with (a), (b) and (c)), US4,873,286(concerned with (d)), US4,659,760(concerned with (e)), US4,642,358 and US4,600,741(concerned with (f)), US4,895,945, US5,096,979, US5,089,566 and US5,041,504 (concerned with (g)), US4,755,566 (concerned with (h)).

For said polymer alloy, commonly said amorphous thermoplastic resin and said crystalline thermoplastic resin are mixed together with a weight ratio in the range of between 1: 99 and 99 : 1, with said rubber and/or elastomer being added in an amount in the range of between 0.5 and 100 parts by weight to 100 parts by weight of said polymer alloy, and with said compatibilizer being added in an amount in the range of between 0.01 and 50 parts by weight.

The commercial polymer alloy of polyphenylene ether or modified polyphenylen ether and polyamide used for the masking member of the present invention may be such as XYRON(Lynex1400,A0100 and X9830)(Asahi Chemical Industry Co., Ltd. ), Noril (GTX-600,6203,6013 and 6009)(GE Plastic Japan Ltd.), Lemalloy BX505, Lemalloy BX542A, Lemalloy BX528A-3, Lemalloy C61HL, Lemalloy C82HL, Lemalloy CX555A (Mitsubishi Engineering Plastics Co., Ltd.).

The commercial polymer alloy of polyphenylene ether or modified polyphenylen ether and polypropylene may be such as LemalloyP(PX-600, 601, 603, 620, 612A, 600P and 600N)(Mitsubishi Engineering Plastics Co., Ltd.), Noril(PPX7110)(GE Plastic Japan Ltd.), XYRON(EV102,TO700)(Asahi Chemical Industry Co., Ltd.) or the like.

### [Filler]

Filler may be added to said thermoplastic resin. Said filler may be such as ; inorganic filler such as calcium carbonate, magnesium carbonate, barium sulphate, calcium sulphate, calcium sulfite, calcium phosphate, calcium hydroxide, magnesium hydroxide, aluminum hydroxide, magnesium oxide, titanium oxide, iron oxide, zinc oxide, alumina, silica, diaton earth, dolomite, gypsum, talc, clay, asbestos, mica, glass fiber, carbon fiber, calcium silicate, calcium carbonate, bentonite, white carbon, carbon black, iron powder, aluminum powder, stone powder, blast furnace slag, fly ash, cement, zirconia powder, or the like; natural fiber such as cotton, hemp, bamboo fiber, coconut fiber, wool silk, or and the like; organic synthetic fiber such as polyamide fiber, polyester fiber, acrylic fiber, viscose fiber, acetate fiber, vinyl chloride fiber, vinylidene chloride fiber, vinylon fiber, acetate fiber, or the like; inorganic fiber such as asbestos fiber, glass fiber, carbon fiber, ceramic fiber, metallic fiber, whisker, or the like; an organic filler such as linter, linen, sisal, wood flour, coconut flour, walnut flour, starch, wheat flour, or the like.Said fillers may improve shape and dimensional stability, compression and mechanical strength, heat resistance, and the like. Commonly, filler is added in an amount in the range of between about 0.01 and 200 weight %.

### (Other additives)

In addition to said fillers, pigment, dyestuff, a plasticizer such as a DOP, DBP or the like, an antioxidant, antistatic agent, crystallization agent, flame retardant, antiflaming agent, insecticide, antiseptic, various waxes, a lubricant, age resister, ultraviolet absorber, and a blowing agent of a chemical or capsule type, or the like may be added to said polymer alloy. Two or more kinds of said agent may be mixed, and then added to said polymer alloy.

### (Stretch molding)

In the present invention a green masking member is manufactured by stretch molding of a thermoplastic resin sheet. Said stretch molding may include vacuum forming, pressure forming, vacuum-pressure forming, press molding, or the like, the stretching force in said stretch molding being exerted on said the thermoplastic resin sheet. In said stretch-molding, the thermoplastic resin sheet is stretched, so that the residual stress may reside in the resulting molded article.

Said green masking member may contract due to the following heating treatment, so that the size of said green masking member is determined considering the margin of contraction, adapting to obtain the size and shape of the prescribed part to be masked.

### (Heating treatment)

In the present invention, said green masking member (molded article) is heated and softened after molding. Said heating and softening treatment may be carried out at a temperature below that of the melting point of said thermoplastic resin, which is the material of said molded article. In a case where said molded article is heated at a temperature higher than that of the melting point of said thermoplastic resin, the resin material of said molded article will become excessively soft, the concern being that said molded article will deform. The heating time is usually set to be from 2 to 120 minutes.

Said resin material of said molded article is softened by said heating and softening treatment, and flows, so that the residual stress in said molded article will be reduced, and the contraction of said molded article caused by the residual stress will be reduced, or eliminated. In particular, in a case where said resin material is a polymer alloy of amorphous thermoplastic resin and crystalline thermoplastic resin, the broken or deformed crystalline thermoplastic resin crystals, the result of the stretching force exerted during molding, are repaired and regenerated by said heating treatment and as a result, the contraction after said repair and regeneration is substantially eliminated.

The present invention is concretely described below.

### [THE FIRST EMBODIMENT]

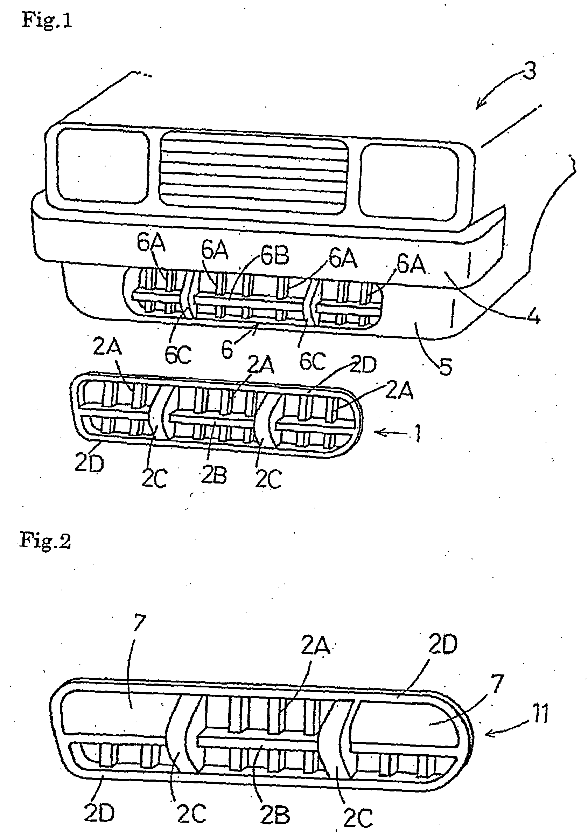

As shown in Figure 1, a car body(3) has a front bumper(4) and when said car body(3) is coated, the masking member(1) of this embodiment is attached to the air inlet hole(6) of the lower skirt part(5) of said front bumper(4). A plural number of reinforcing frame bars(6A, 6B) are equipped lengthwise and breadthwise, with a pair of support pillars(6C) being equipped on the both sides of said air inlet hole(6). Correspondingly, frame bar grooves (2A, 2B) for inserting said reinforcing frame bars(6A,6B), are equipped lengthwise and breadthwise in said masking member(1), with a pair of pillar grooves(2C) for inserting said support pillars(6C) being equipped in both sides of said masking member(1). A flange(2D) is formed along the front of said masking member. Said fitting grooves(2A,2B,2C) work as ribs to support said masking member(1). At the cross point of the horizontal(longitudinal) fitting groove(2B), and the vertical(short side direction) fitting groove(2A), said horizontal fitting groove(2B) overlaps said vertical fitting groove(2A), for the purpose of improving the horizontal rigidity of said masking member(1), while at the cross point of said vertical fitting groove(2C), and horizontal(short side direction) fitting grove(2B), said vertical fitting groove(2C) overlaps said horizontal fitting groove(2B), to improve the rigidity of said masking member(1) in its vertical direction.

Said masking member (1) was manufactured by preparing a green masking member (1) by vacuum forming a polypropylene sheet(thickness 0.4mm) containing 30% by weight of calcium carbonate, and heat-treating said green masking member.

Said masking member(1) is fitted to the inside of said air inlet hole(6), then each reinforcing frame bar(6A, 6B) is inserted into each frame bar groove(2A, 2B), then each support pillar(6C) is inserted into each pillar groove(2C).

As described above, said masking member(1) is attached to said air inlet hole(6) of the skirt part(5) which is a masking part, after which said car body(3) is coated with paint, following which the resulting coating film is cured by heating.

### [THE SECOND EMBODIMENT]

A masking member (11), as shown in Figure 2 was manufactured, after which it was used for the masking of the air inlet hole (6) of said front bumper (4) of the car in THE FIRST EMBODIMENT.

In said masking member (11), there are fitting grooves (2A, 2B, 2C) into which said reinforcing frame bars (6A, 6B) and said support pillars (6C, 6C)are each to be inserted, with convex parts (7, 7) projecting from the front of said masking member(11), and a flange (2D) formed around the front of said masking member(11). The lengthwise rigidity of said masking member (11) is improved by the shape of said convex parts (7, 7). By improving its lengthwise rigidity, the swelling at either end of said masking member caused by warping of said masking member (11) is prevented, said warping being produced by the curing of the paint film applied to said masking member during coating.

Although said reinforcing frame bars (6A, 6B) do not fit into said convex parts (7, 7), said masking member(1) is fixed to said air inlet hole (6) with said fitting grooves (2A, 2B, 2C), without any trouble.

Generally, in a masking member of this type(1), it is not always necessary to set all of said fitting grooves (2A,2B,2C) into which all of said reinforcing frame bars (6A, 6B) and, said supporting pillars (6C, 6C) are to be inserted, as long as the necessary number of fitting grooves (2A, 2B, 2C) to fix said masking member(11) to said air inlet hole (6) are provided. Further, concave parts may be formed instead of said convex parts (2, 2), and are expected to have the same effect as said convex parts.

Said masking member (1) was manufactured using the same method as described in THE FIRST EMBODIMENT with the polymer alloy described below.

A polymer alloy of PPE and a polyamide, XYRON(Lynex A1400), Asahi Chemical Industry Co., Ltd., Noril (GTX6013), GE Plastic Japan Ltd.

### [THE THIRD EMBODIMENT]

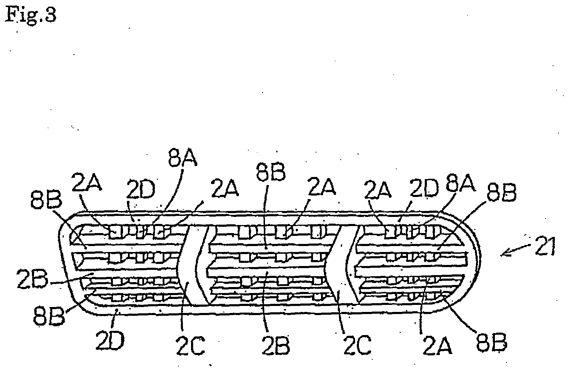

The masking member (21), shown in Figure 3, for the masking of the air inlet hole (6) of said front bumper (4) of the car in THE FIRST EMBODIMENT was manufactured.

In said masking member (21), there are fitting grooves (2A, 2B, 2C) into which said reinforcing frame bars (6A, 6B), and said support pillars (6C,6C) are fitted, vertical ribs (2, 2), horizontal ribs (3, 3), and a flange (2D) formed along the front of said masking member (21). Although said fitting grooves (2A, 2B, 2C) work as ribs, the rigidity of said masking member (1) in both its vertical and horizontal directions is further improved by said vertical ribs (2, 2) and horizontal ribs (3, 3).

These ribs give rigidity to the masking member in its lengthwise direction, but degrades its rigidity in its crosswise direction, since the masking member is apt to be folded at said rib. However, at the cross point of ribs, in a case where one rib overlaps another, the rigidity along said overlapping rib can be improved.

As for masking member (21) of this embodiment, since said horizontal ribs (8B) are settled to overlap said vertical ribs (8A), the lengthwise (horizontal) rigidity of said masking member (21) is greatly improved. By improving the lengthwise rigidity of said masking member (21), the swelling at either end of said masking member (21) caused by warping of said masking member (21) is prevented, said warping being caused by the curing of the paint coating film applied to said masking member (21), during coating.

Said masking member (21) was manufactured using the same method as described in The First Embodiment, with the polymer alloy described below. A polymer alloy of PPE and PP, Lemalloy P (PX600), Mitsubishi Engineering Plastic Co., XYRON (EV 102), Asahi Chemical Industry Co., Ltd.

### [Performance Test]

The masking member of the present invention, having been produced by the heating and softening treatment of a green masking member, was tested in order to measure its dimensional stability.

To manufacture a masking member having the same shape as said masking member of The First Embodiment, a green masking member, with length of 739.0mm was prepared by vacuum forming a sheet (thickness 0.4mm) made of a mixture of 70 parts by weight of polypropylene, and 30 parts by weight of calcium carbonate.

Said green masking member was heated and softened (heating and softening treatment), after which the length of the resulting masking member was measured. The conditions of said heating and softening treatment were set to be 120°C for 10 minutes, and then room temperature for 60 minutes. The measured length of said masking member is shown in Table 1.

After said heating and softening treatment, said masking member was fit to the part to be masked, after which the coating process was carried out. After coating, said coated part was heated at 120°C for 40 minutes, and then kept at room temperature for 60 minutes, with said masking member. After said coating process, the length of said masking member was measured. The result is shown in Table 1.

Further, said coating process was repeated first 5 times and then 10 times, and the length of said masking member, after 5, then 10 repetitions of said coating process, were each measured. The results are also shown in Table 1

**Table 1**

| | |
|---|---|
| Size of the green masking member(mm) | 739.0 |
| Size after heating and softening(mm) | 737.9 |
| Size after coating process(1 time)(mm) | 737.2 |
| Size after coating process(5 times) (mm) | 737.0 |
| Size after coating process(10 times)(mm) | 736.9 |

As shown in Table 1, said green masking member whose length was 739.0mm became a masking member with a length of 737.9mm after said heating and softening treatment. Said masking member, after said heating and softening treatment, fits the part to be masked, and the size of said masking member was almost unchanged after a few repetitions of said coating process.

Accordingly, it is confirmed that a masking member obtained by the heating and softening treatment of a green masking member has excellent dimensional stability.

Further, a green masking member, having the same shape as in The First Embodiment, was manufactured by vacuum forming a polymer alloy sheet (thickness 0.4mm), said polymer alloy being made of 60 parts by weight of modified PPE, and 30 parts by weight of a polypropylene using, liquid dienepolymer as a compatibilizer. The length of said green masking member was 740.6mm. Said green masking member was heated to be softened (heating and softening treatment). The condition of said heating and softening treatment was set to be 130°C for 5 minutes, and then room temperature for 60 minutes. The length of the resulting masking member was measured, and the result is shown in Table 2.

Said masking member was fit to the part to be masked, and the coating process was carried out. After coating, said part was heated at 120°C for 40 minutes, and then kept at room temperature for 60 minutes. The length of said masking member after the coating process was measured. The result is shown is Table 2.

Further, said coating process was repeated first 5 times, and then 10 times, and the length of said masking member after 5, then 10 repetitions of said coating process were each measured. The results are shown Table 2.

**Table 2**

| | |
|---|---|
| Size of the green masking member(mm) | 740.6 |
| Size after heating and softening(mm) | 738.0 |
| Size after coating process(1 time)(mm) | 738.0 |
| Size after coating process(5 times) (mm) | 738.0 |
| Size after coating process(10 times)(mm) | 737.9 |

As shown in Table 2, said green masking member whose length was 740.6mm, became a masking member with a length of 738.0mm after said heating and softening treatment. Said masking member, after said heating and softening treatment, fits the part to be masked, and size of said masking member was almost unchanged after a few repetitions of said coating process.

Accordingly, it is confirmed that a masking member obtained by the proper heating and softening treatment of a green masking member has excellent dimensional stability.

The masking member of the present invention is manufactured by vacuum forming a thermoplastic resin sheet, and particularly residual stress resides in a masking member manufactured by stretch-molding such as vacuum forming. In a case where a masking member in which residual stress resides is used in the coating process, said masking member may contract due to heating during said coating process. Since it is necessary that the masking member fits the part to be masked, said part having a complex shape, if the masking member has a good dimensional stability, said masking member may be used repeatedly.

In the present invention, even if the masking member is used for surface treatments including the heating process such as coating process or the like, the contraction of the masking member is suppressed and said masking member is repeatedly usable.

### POSSIBILITY OF INDUSTRIAL UTILITY

The masking member of the present invention is used to protect the part not be coated (the part to be masked), for instance, when a car body, bumper, and the like are coated.

## Claims

1. A method for the manufacturing of a masking member comprising; the preparation of a green masking member by stretch molding a thermoplastic resin sheet, and then heating and softening said green masking member to achieve a size and shape suitable for the part to be masked.

2. A method for the manufacturing of a masking member in accordance with Claim 1, wherein said heating and softening treatment is carried out at a temperature below that of the melting point of said thermoplastic resin sheet.

3. A method for the manufacturing of a masking member in accordance with Claim 1 or 2, wherein said thermoplastic resin sheet is made of a thermoplastic resin into which a filler is mixed.

4. A method for the manufacturing of a masking member in accordance with Claim 1 or 2, wherein said thermoplastic resin sheet is a foamed thermoplastic resin sheet.

5. A method for the manufacturing of a masking member in accordance with any of Claims 1 to 4, wherein said thermoplastic resin sheet is made of a polyolefin group resin.

6. A method for the manufacturing of a masking member in accordance with any of Claims 1 to 4, wherein said thermoplastic resin sheet is made of a polystyrene group resin.

7. A method for the manufacturing of a masking member in accordance with any of Claims 1 to 4, wherein said thermoplastic resin sheet is made of a polymer alloy containing an amorphous thermoplastic resin and a crystalline thermoplastic resin.

8. A method for manufacturing a masking member in accordance with Claim 7, wherein said amorphous thermoplastic resin(s) is (are) of one or more kind(s) of resin(s) selected from a group consisting of polystyrene, acrylonitrile-butadiene-styrene resin, polycarbonate, modified polyphenylene ether, polyphenylene ether, polysulfone, polyarylate, polyimide, polyetherimide, polyethersulfone, and polyamideimide, with said crystalline thermoplastic resin(s) being a polyolefin group resin and/or polyamide group resin.

9. A method for the manufacturing of a masking member in accordance with Claims 1 to 8, wherein said stretch molding is achieved by vacuum and/or pressure forming.
